# EUROPEAN PATENT SPECIFICATION

(11) **EP 2 724 961 B1**
(45) Date of publication and mention of the grant of the patent: **01.07.2015**
(21) Application number: 13190305.6
(22) Date of filing: 25.10.2013
(51) Int. Cl.: B65G 1/14

(54) **Structure for holding and transporting parts**
Struktur zum Halten und Transportieren von Teilen
Structure permettant de porter et de transporter des pièces

(30) Priority: 26.10.2012 ES 201231649
(43) Date of publication of application: 30.04.2014
(73) Proprietor: Alambres Pamplona S.L., 31799 Ripa-Valle de Odieta (Navarra) (ES)
(72) Inventor: Mondejar Jimenez, Josefina, 31799 RIPA- Valle de Odieta (Navarra) (ES)
(74) Representative: Pons Ariño, Angel

(56) References cited:
- DE-U1-202006 005 086
- JP-Y- S4 118 910
- US-A- 3 118 531

## Description

### OBJECT OF THE INVENTION

The present invention may be included in the technical field of structures for the storage and transport of parts and goods, which are distributed being grouped and occupying a reduced space.

The structure disclosed in the present invention is particularly applicable to a series of parts which require to be transported, which are held and stored parallel to each other, such as for example parts having little thickness compared to the surface thereof, for example parts used in the industry in general, and particularly those used in assembly and manufacturing stages of the automotive industry.

The present invention is focused on the means employed in this structure to facilitate hanging and unhanging those parts in a fast and easy way.

### BACKGROUND OF THE INVENTION

In the automotive industry, there is a need for handling and transporting parts of a considerable size which have to be grouped so as to minimize the occupied space, and thus reduce the volume they occupy in the means of transport transferring such parts, for example from the manufacturing site thereof to the plant in which mounting of said parts within another assembly, such as a vehicle, is carried out.

In this sense, different metallic structures are known which both adopt appropriate dimensions and configuration, and incorporate spacing and supporting means guaranteeing the parts to stay grouped and held in position during transport.

These structures adopt particular geometries and are intended to accommodate a series of elongated and not very thick parts, which are arranged parallel to each other. Although this structure allows optimum grouping for transportation, mounting and demounting of each of these parts may be hindered by the part itself, which is following adjacent thereto, or by the supports themselves used for fastening and supporting these parts.

To make mounting and demounting operation easier, and thereby optimize operation times, there are some structures known which incorporate dynamic holding elements, instead of the static ones belonging to the above structures, designed in such a way that they go along with the hanging and unhanging operation so as to facilitate release and retraction of the holding element situated immediately after for hanging or unhanging the adjacent part.

In this sense, there are structures known for storage and transportation which have holding elements, provided with tilting hooks, arranged parallel to each other, which stay retracted in a resting position, and being mechanically linked among them, so that the tilting movement of one of them, as a consequence of hanging a part thereupon, determines the transmission of that tilting movement to the hook situated immediately after, which will also tilt facilitating the next part mounting.

This movement is transmitted consecutively among hooks, enabling the parts mounting operation to be quickly performed, preventing hooks from hindering the hanging of the next part, since generally the hooks stay retracted and hidden, and only the hook to be used with the new part is incorporated by tilting, due to the tilting of the adjacent hook on which the adjacent part has been previously mounted.

The space occupied by the connecting elements among hooks, as well as the tilting path of those hooks, determines the possibilities regarding easiness of mounting/demounting of parts, and operation times which are considered susceptible of being optimized by adopting alternative designs of the holding elements, mechanisms and other associated parts. Document US 3118531A discloses a structure for holding and transporting parts according to the preamble of claim 1.

### DESCRIPTION OF THE INVENTION

The structure for holding and transporting parts object of the present invention is according to the appended claim 1, it includes holding elements situated adjacent to each other and provided with linear vertical displacement, which stay mostly hidden when in a non-operation position, and which carry along, by their vertical displacement, the adjacent holding element for mounting or demounting the next part, transmitting this displacement consecutively among the holding elements placed in the next positions, until all the parts are mounted or demounted.

In this case, the holding elements comprise a vertical body having a hook in the lower end thereof, where the part is hanged, and they move along vertically and sequentially, in such a way that they hardly occupy useful space, facilitating the mounting and demounting of parts engaging thereto in a fast and easy way.

The structure object of the present invention includes an elongated frame provided with guides which allow the guided displacement of the holding elements. The frame is formed, preferably, by an upper beam, side uprights and a lower beam, wherein said lower beam preferably has guides facilitating the guided vertical displacement of the holding elements.

The holding elements comprise a vertical body, which may have for example a U profile, whose lower end is attached to the aforementioned hook, and comprises a protruding pusher on the body side, and a stopper attached to the body protruding on the body side opposite to the pusher. The pusher and the stopper are positioned and dimensioned in such a way that the holding element downward displacement, caused by the weight action of a part hanging on the hook, determines the pusher thrust over the adjacent holding element stopper, and determines the downward displacement of the latter until an intermediate position in which the hook separates from the frame leaving enough space to receive a new part.

The pusher is preferably located in correspondence to the upper end of the vertical body, and the stopper is preferably located at a lower level than the pusher, halfway up the body.

Between each holding element and frame, recovery means have been provided, such as a spring, which tend to keep the holding element in its retracted position within the frame, and are intended to facilitate the gradual downward displacement of the holding element towards a lower position, due to the previous holding element thrust and the weight of the part itself hanging on its hook, and they are also intended to facilitate the holding element to return to its upper position, in an upward direction, when unhanging of parts is carried out.

It has been contemplated that the aforementioned recovery means are preferably placed attached to the holding element stopper at one of its ends, and at the other to the upper beam of the frame.

The maximum vertical displacement stroke of the holding element is to be defined by the location in which the pusher stops against the lower beam. The lower beam may be configured basically by two parallel punched flat bars, lower and upper, extending along the entire length of the structure, which comprise aforementioned guides of an appropriate configuration, which are usually openings of the same configuration and slightly bigger dimension than the body, so as to allow guided displacement of the vertical body. Likewise, the flat bars may comprise slots which facilitate the stopper to pass through, however the upper flat bar will prevent the pusher to pass through, thus defining the maximum downward displacement of the holding element.

As described above, the thrust exerted by the pusher of one holding element on the adjacent holding element, causes the latter to travel part of its stroke, about half of its maximum stroke, spacing the hook with respect to the frame an adequate distance for hanging the part. In this position, with the hook spaced apart with respect to the frame, the part is placed on the hook, which implies that the holding element of said hook moves downwards, fulfilling the stroke started by the thrust of the previous holding element. When that final stroke starts, this holding element will push in turn the following holding element located next to it, which, as the previous one, will realize a first stroke until the next part is hanging thereon. This operation will be repeated and performed with the rest of the parts being mounted on the other hooks until the structure is entirely filled, being thus ready for transport.

Once the structure arrives to destination, demounting is carried out. To realize the demounting of parts, the first step is the unhanging of the first part, such that upon unhanging, the recovery action of the spring determines that its holding element (previous one) go upwards until its stopper contacts the pusher of the holding element (next one) supporting another part. With the previous holding element in this position, the hook thereof is situated halfway up and defines a space which allows unhanging the next part placed in the following holding element, without said hook being an obstacle for said part release.

This operation is continuously repeated with the rest of the parts until unhanging of the last part is carried out.

### DESCRIPTION OF THE DRAWINGS

To implement the present description and in order to provide a better understanding of the characteristics of the invention, according to a preferred embodiment thereof, a set of drawings is attached as part of this description, with an illustrative but not limitative purpose, which represents the following:
Figure 1.- It shows a perspective view of the structure for holding and transporting parts in the position in which a first holding element is in its maximum extension position, position in which it has pushed and caused the partial displacement of the second holding element.
Figure 2.- It shows an upper view of the structure corresponding to the same situation of figure 1, in which a hanging part is shown causing its holding element to go completely downwards and the adjacent holding element to go partially downwards, ready to receive a new part.
Figure 3.- It shows an exploded view of the frame and the holding elements.

### PREFERRED EMBODIMENT OF THE INVENTION

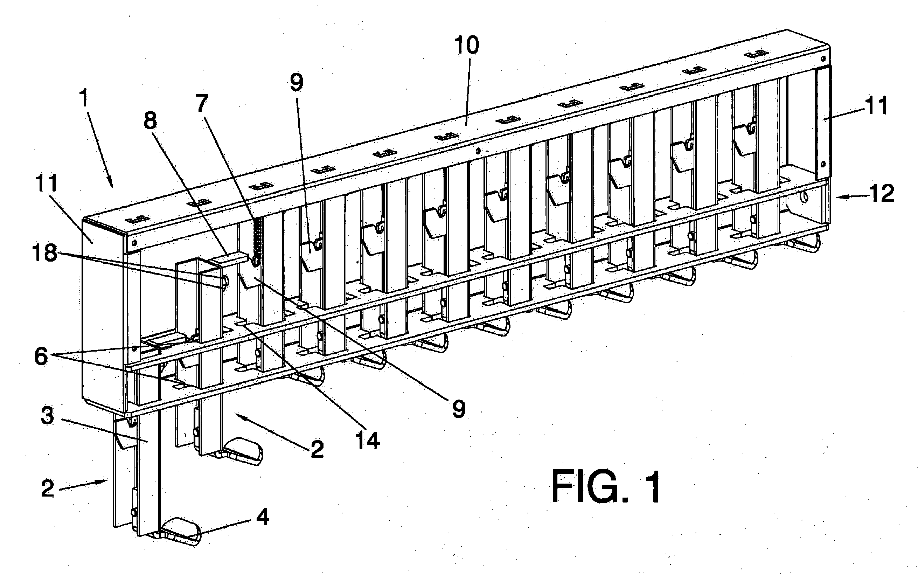

As it can be observed in figure 1, the structure for holding and transporting parts object of the present invention comprises an elongated frame (1), which comprises in turn an upper beam (10), side uprights (11) and a lower beam (12), accommodating a series of holding elements (2) arranged parallel and adjacent to each other each comprising a vertical body (3), formed by a U profile, which comprises a hook in its lower end (4) intended for hanging parts (5), in which those holding elements (2) are provided with a guided displacement by means of guides (6) defined in the frame (1) in vertical direction between an upper position and a lower position.

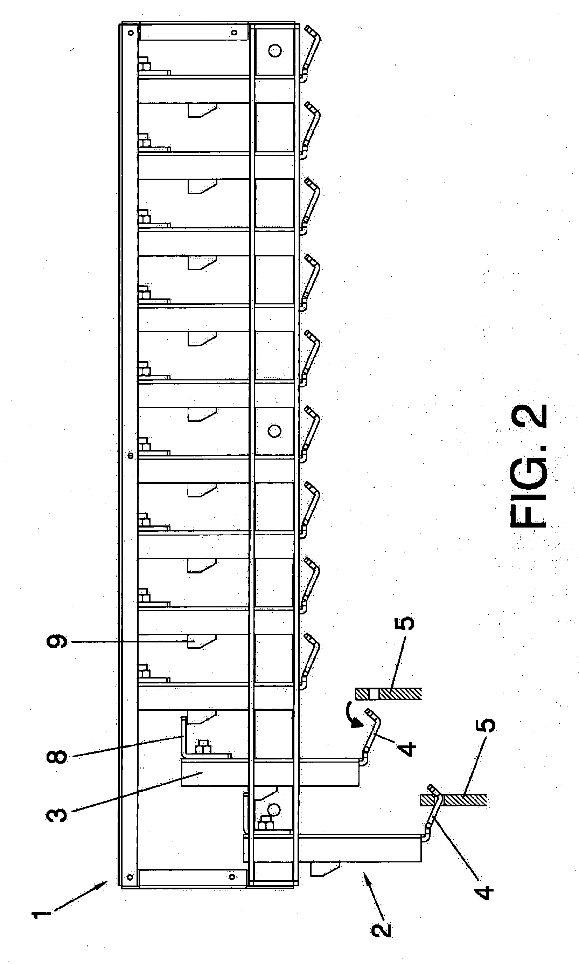

The holding elements (2) perform a downward displacement from the upper position thereof, caused by the parts (5) weight hanging on the hooks (4), as it can be seen in figure 2. On the other hand, likewise the structure comprises elastic recovery means, such as springs (7), (in figure 1 only one spring (7) has been depicted for higher clarity), whose ends are attached to the holding element (2) and to the frame (1), which facilitate vertical and downward recovery displacement of the holding element (2) towards the upper position.

The holding elements (2) comprise a pusher (8) as well, attached to the body (3) and protruding from the body (3) side, and they also comprise a stopper (9) attached to the body (3) protruding from the body (3) side opposite to the pusher (8), positioned and dimensioned in such a way that the downward displacement of one holding element (2) caused due to the weight of a part (5) hanging on the hook (4), as it can be observed in figure 2, determines the thrust of the pusher (8) on the stopper (9) of the holding element (2) placed next to it, as well as the downward displacement of the latter until an intermediate position in which the hook (4) separates from the frame (1) leaving enough space to receive a new part (5) which will be then mounted on said hook (4), as indicated by the arrow.

The pusher (8), as it can be observed in figure 1 or 2, is situated in correspondence to the upper end of the body (3), and the stopper (9) is situated halfway up of the body (3).

On the other hand and more particularly, it can be appreciated that the spring (7) shown in figure 1, is attached to the stopper (9) at an end of the holding element (2) and at the other end to the upper beam (10) of the frame (1).

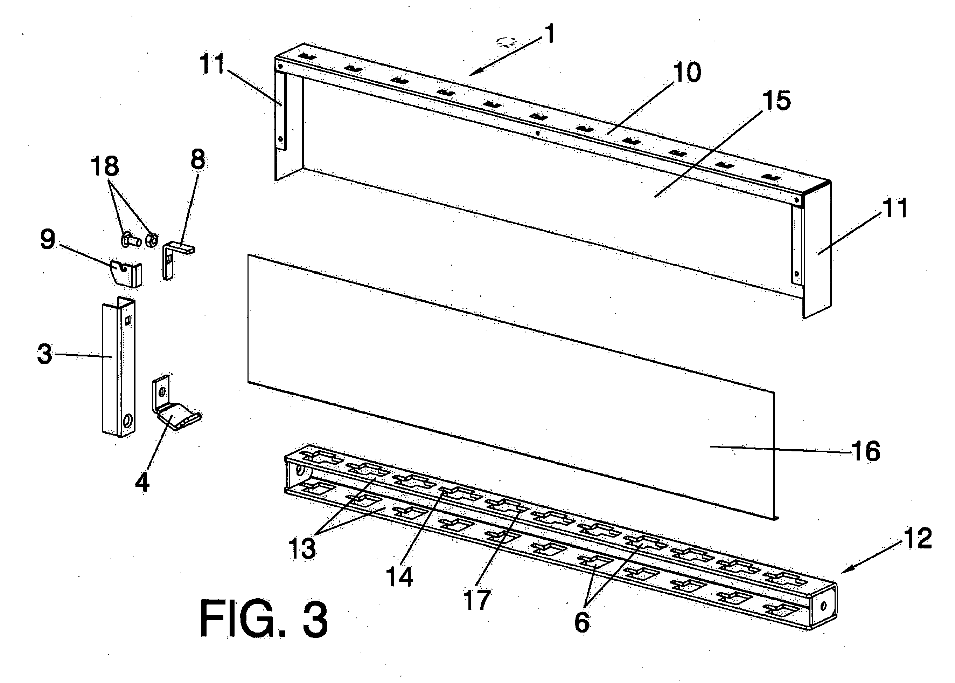

In figure 3, it may be observed that the upper beam (12) of the frame (1) is formed by an assembly comprising two flat bars (13) parallel to each other, in which guides (6) are defined, as well as punch-holes (14) shown as well in figure 1, facilitating the stoppers (9) to go through during downward or upward displacement of the holding elements (2). Likewise, a slot (17) is shown defined in the upper flat bar (13), intended to facilitate the fixing elements (18) to pass through, in this case the screw and nut which can be seen in figure 1, attaching the pusher (8) to the body (3).

Likewise, Figure 3 shows a rear sheet (15) and a front sheet (16) which can close the frame (1) through its rear and front face.

## Claims

1. Structure for holding and transporting parts comprising:
an elongated frame (1),
holding elements (2) arranged parallel and adjacent to each other, each comprising a vertical body (3) having a hook (4) in its lower end intended for hanging parts (5),
**characterized in that** the structure additionally comprises:
guides (6) defined in the frame (1) which allow a guided vertical displacement of the holding elements (2),
elastic recovery means (7), provided with two ends, in which one of them is attached to the holding element (2) and the other one to the frame (1), intended to facilitate the downward gradual displacement of the holding element (2) towards a lower position, and the recovery of an upper position of the holding element (2) in upward direction,
and **in that** the holding elements (2) additionally comprise:
a pusher (8) attached to the body (3), protruding from one side of the body (3),
a stopper (9) attached to the body (3) and protruding from the body side opposite to the pusher (8),
both the pusher (8) and the stopper (9) of each holding element (2) placed and dimensioned in such a way that the downward displacement of a holding element (2), caused by the weight of a part (5) hanging on its hook (4), determines the thrust of the pusher (8) on the stopper (9) of the adjacent holding element (2), and the downward displacement of the latter until an intermediate position in which the hook (4) is spaced apart from the frame (1) to receive a new part (5).

2. Structure for holding and transporting parts according to claim 1, **characterized in that** the pusher (8) is placed in correspondence with the upper end of the body (3) and the stopper (9) is placed halfway up the body (3).

3. Structure for holding and transporting parts according to claim 1 **characterized in that** the frame (1) comprises an upper beam (10), side uprights (11) and a lower beam (12).

4. Structure for holding and transporting parts according to claim 3 **characterized in that** the lower beam (12) is formed by an assembly comprising two parallel flat bars (13) in which guides (6) are defined.

5. Structure for holding and transporting parts according to claim 4, **characterized in that** the flat bars (13) include perforations (14) intended to facilitate the stoppers (9) to go through during downward or upward displacement of the holding elements (2).

6. Structure for holding and transporting parts according to claim 1 **characterized in that** the vertical body (3) is a U profile.

7. Structure for holding and transporting parts according to claim 3, **characterized in that** the elastic recovery means (7) are attached at their ends to the stopper (9) of the holding element (2), and to the upper beam (10) of the frame (1), respectively.

8. Structure for holding and transporting parts according to claim 1 or 7, **characterized in that** the elastic recovery means (7) are springs.

## Patentansprüche

1. Struktur zum Halten und Transportieren von Teilen, die
einen länglichen Rahmen (1),
parallel und nebeneinander angeordnete Halteelemente (2) umfasst, wobei jedes einen senkrechten Körper (3) umfasst, der am unteren Ende einen Haken (4) zum Anhängen von Teilen (5) aufweist,
**dadurch gekennzeichnet, dass** die Struktur zusätzlich
im Rahmen (1) definierte Führungen (6), die eine senkrechte, geführte Bewegung der Halteelemente (2) ermöglichen,
elastische Rückstellmittel (7), die mit zwei Enden versehen sind, wobei das eine am Halteelement (2) und das andere am Rahmen (1) angebracht ist, und die dazu vorgesehen sind, die allmähliche Abwärtsbewegung des Halteelements (2) in eine niedrigere Position und die Rückstellung in eine obere Position des Halteelements (2) nach oben zu erleichtern, umfasst und dass die Halteelemente (2) zusätzlich
einen am Körper (3) angebrachten Schieber (8), der aus einer Seite des Körpers (3) herausragt,
einen am Körper (3) angebrachten Stopper (9), der aus der dem Schieber (8) entgegengesetzten Seite des Körpers herausragt,
wobei der Schieber (8) und der Stopper (9) des Halteelements (2) jeweils so platziert und dimensioniert sind, dass die Abwärtsbewegung des Halteelements (2), die durch das Gewicht des an dessen Haken hängenden (4) Teils (5) verursacht wird, die Schubkraft des Schiebers (8) auf den Stopper (9) des benachbarten Halteelements (2) und die Abwärtsbewegung des Letzteren in eine Zwischenlage, in der der Haken (4) vom Rahmen (1) beabstandet ist, um ein neues Teil (5) aufzunehmen, bestimmt.

2. Struktur zum Halten und Transportieren von Teilen nach Anspruch 1, **dadurch gekennzeichnet, dass** der Schieber (8) entsprechend dem oberen Ende des Körpers (3) positioniert und der Stopper (9) auf halber Höhe des Körpers (3) positioniert ist.

3. Struktur zum Halten und Transportieren von Teilen nach Anspruch 1, **dadurch gekennzeichnet, dass** der Rahmen (1) einen oberen Balken (10), Seitenschenkel (11) und einen unteren Balken (12) umfasst.

4. Struktur zum Halten und Transportieren von Teilen nach Anspruch 3, **dadurch gekennzeichnet, dass** der untere Balken (12) durch eine Konstruktion gebildet wird, die zwei parallele Flachstäbe (13) umfasst, in denen die Führungen (6) definiert sind.

5. Struktur zum Halten und Transportieren von Teilen nach Anspruch 4, **dadurch gekennzeichnet, dass** die Flachstäbe (13) Bohrungen (14) beinhalten, die dazu vorgesehen sind, den Durchgang der Stopper (9) bei der Abwärts- oder Aufwärtsbewegung der Haltelemente (2) zu erleichtern.

6. Struktur zum Halten und Transportieren von Teilen nach Anspruch 1, **dadurch gekennzeichnet, dass** der senkrechte Körper (3) ein U-Profil ist.

7. Struktur zum Halten und Transportieren von Teilen nach Anspruch 3, **dadurch gekennzeichnet, dass** die elastischen Rückstellmittel (7) an ihren Enden jeweils am Stopper (9) des Halteelements (2) und am oberen Balken (10) des Rahmens (1) angebracht sind.

8. Struktur zum Halten und Transportieren von Teilen nach Anspruch 1 oder 7, **dadurch gekennzeichnet, dass** die elastischen Rückstellmittel (7) Federn sind.

## Revendications

1. Structure permettant de porter et de transporter des pièces comprenant :
un cadre allongé (1),
des éléments de retenue (2) disposés parallèlement et adjacents l'un à l'autre, chacun comprenant un corps vertical (3) possédant un crochet (4) à son extrémité inférieure destiné à la suspension des pièces (5),
**caractérisée en ce que** la structure comprend en outre :
des guides (6) définis dans le cadre (1) qui permettent un déplacement vertical guidé des éléments de retenue (2),
des moyens de restauration élastiques (7), possédant deux extrémités, dont l'une d'elles est fixée à l'élément de retenue (2) et l'autre au cadre (1), destinés à faciliter le déplacement graduel vers le bas de l'élément de retenue (2) vers une position inférieure, et la restauration d'une position supérieure de l'élément de retenue (2) vers le haut,
et **en ce que** les éléments de retenue (2) comprennent en outre :
un poussoir (8) fixé au corps (3), dépassant d'un côté du corps (3),
un butoir (9) fixé au corps (3) et dépassant du côté du corps opposé au poussoir (8),
le poussoir (8) ainsi que le butoir (9) de chaque élément de retenue (2) placés et dimensionnés de telle façon que le déplacement vers le bas d'un élément de retenue (2), provoqué par le poids d'une pièce (5) suspendue à son crochet (4), détermine la poussée du poussoir (8) sur le butoir (9) de l'élément de retenue (2) adjacent, et le déplacement vers le bas de ce dernier jusqu'à une position intermédiaire dans laquelle le crochet (4) est écarté du cadre (1) pour recevoir une nouvelle pièce (5).

2. Structure permettant de porter et de transporter des pièces selon la revendication 1, **caractérisée en ce que** le poussoir (8) est placé de façon à correspondre avec l'extrémité supérieure du corps (3) et le butoir (9) est placé à mi-hauteur du corps (3).

3. Structure permettant de porter et de transporter des pièces selon la revendication 1, **caractérisée en ce que** le cadre (1) comprend une poutre supérieure (10), des montants latéraux (11) et une poutre inférieure (12).

4. Structure permettant de porter et de transporter des pièces selon la revendication 3, **caractérisée en ce que** la poutre inférieure (12) est formée par un assemblage comprenant deux barres plates (13) parallèles dans lesquelles des guides (6) sont définis.

5. Structure permettant de porter et de transporter des pièces selon la revendication 4, **caractérisée en ce que** les barres plates (13) comportent des perforations (14) destinées à faciliter leur traversée par les butoirs (9) durant le déplacement vers le bas ou vers le haut des éléments de retenue (2).

6. Structure permettant de porter et de transporter des pièces selon la revendication 1, **caractérisée en ce que** le corps vertical (3) est un profil en U.

7. Structure permettant de porter et de transporter des pièces selon la revendication 3, **caractérisée en ce que** les moyens de restauration élastiques (7) sont fixés à leurs extrémités au butoir (9) de l'élément de retenue (2), et à la poutre supérieure (10) du cadre (1), respectivement.

8. Structure permettant de porter et de transporter des pièces selon la revendication 1 ou 7, **caractérisée en ce que** les moyens de restauration élastiques (7) sont des ressorts.
